# EUROPÄISCHE PATENTSCHRIFT

(11) **EP 0 858 861 B1**
(45) Veröffentlichungstag und Bekanntmachung des Hinweises auf die Patenterteilung: **28.08.2002**
(21) Anmeldenummer: 98102503.4
(22) Anmeldetag: 13.02.1998
(51) Int. Cl.: B23Q 7/14, B23Q 16/02

(54) **Einzugsnippel für eine Palette oder Aufspannplatte zur Halterung von Werkstücken zwecks spanabhebender Bearbeitung**
Drawing pin for pallet or carrier for holding workpieces during machining
Cheville de connection pour palette ou porte-pièce, servant de support pour des pièces à usiner

(30) Priorität: 14.02.1997 DE 19705684
(43) Veröffentlichungstag der Anmeldung: 19.08.1998
(73) Patentinhaber: Stark Spannsysteme GmbH, 6840 Götzis (AT)
(72) Erfinder: Stark, Emil, 6840 Götzis (AT)
(74) Vertreter: Bischof, Hans-Jochen, Dipl.-Ing.

(56) Entgegenhaltungen:
- EP-A- 0 450 383
- DE-A- 4 135 418
- US-A- 4 662 043

## Beschreibung

Gegenstand der Erfindung ist ein Einzugsnippel und dessen Halterung in einer Palette oder Aufspannplatte nach dem Oberbegriff des Patentanspruchs 1.
Ein derartiger Einzugsnippel und dessen Halterung sind beispielsweise mit dem Gegenstand der auf den gleichen Anmelder zurückgehenden DE 41 35 418.4 bekannt geworden.

Bei der damaligen Anordnung wird der Einzugsnippel an einer Aufspannplatte oder Palette fest an der Unter- oder Oberseite der Palette angebracht und hat daher im wesentlichen keinerlei Bewegungsspiel. Derartige Paletten in Verbindung mit Einzugsnippeln dienen dazu, dass die Palette in einem Bearbeitungszentrum eingespannt wird, wobei die Einzugsnippel in zugeordnete Schnellspannzylinder eingreifen, die mittels Federkraft oder mittels anderer Medien den Einzugszylinder in Richtung seiner Längsachse in diesen Schnellspannzylinder hineinziehen, um so die Palette oder Aufspannplatte fest mit dem Schnellspannsystem zu verbinden. In ansich bekannter Weise trägt die Palette oder die Aufspannplatte Halterungen für die Einspannung von zu bearbeitenden Werkstücken.

Im folgenden wird der Einfachheit halber nur von einer Palette gesprochen, worunter verstanden wird, dass es sich um eine schnell wechselbare Aufspannplatte handelt, die auch wendbar ausgebildet sein kann, so dass diese in verschiedenen Orientierungen in einem Schnellspannsystem eingespannt werden kann.

Bei der älteren Patentanmeldung bestand der Nachteil, dass der jeweilige Einzugsnippel fest mit Hilfe von Schrauben an planparallelen Flächen der Aufspannplatte festgeschraubt war und demzufolge praktisch unbeweglich an der Palette befestigt war. Dieser bekannte Einzugsnippel war einbaubedingt mit einem Spiel von etwa 2 bis 3/1000 mm behaftet, um eine günstige Montage an der Palette zu erreichen. Dieses Spiel ist außerdem noch erforderlich, um eine leichte Entfernung der gesamten Palette von dem Schnellspannsystem zu erreichen. Die Palette muß nämlich um wenige tausendstel mm verkantet werden, um ein möglichst günstiges Herausziehen aller Einzugsnippel aus den zugeordneten Schnellspannzylindern zu ermöglichen.

In vielen Fällen ist aber ein derartiges Spiel unerwünscht und soll insbesondere bei der im Schnellspannsystem festgespannten Palette beseitigt werden, da es zu Fertigungsungenauigkeiten führt.

Der Erfindung liegt deshalb die Aufgabe zugrunde, eine Palette mit Befestigung von Einzugsbolzen der eingangs genannten Art so weiterzubilden, dass bei in dem Schnellspannsystem festgelegten Einzugsnippeln die Palette spielfrei mit den Einzugsnippeln verbunden ist und dass beim Lösen der Palette aus dem Schnellspannsystem die Nippel ein Spiel aufweisen.

Zur Lösung der gestellten Aufgabe dient die technische Lehre gemäß Anspruch 1.

Wichtig bei der vorliegenden Erfindung ist, dass die Spannung der Palette in einem Schnellspannsystem so erfolgt, dass die Schnellspannzylinder auf die zugeordneten Einzugsnippel im gespannten Zustand stets eine Zugkraft im wesentlichen senkrecht zur Ebene der Palette ausüben, so dass diese stets in Richtung ihrer Längsachse vorgespannt werden.

Erfindungsgemäss ist nun die Halterung der Einzugsnippel in zugeordneten Sackbohrungen der Palette so ausgebildet, dass aufgrund dieser in Längsrichtung der Einzugsnippel wirkenden Zugkraft das seitliche (zum Pendeln der Einzugsnippel führende) Spiel dann beseitigt wird, wenn eine Zugkraft auf die Einzugsnippel wirkt und aufrecht erhalten bleibt, währenddessen, wenn die Zugkraft nicht mehr wirkt, den Einzugsnippeln wieder ein Pendelspiel zugeordnet wird, so dass beim Lösen der Schnellspannzylinder die Palette mit ihren Einzugsnippeln leicht wieder verkantet werden kann und deshalb leicht von dem Schnellspannsystem entfernt werden kann.

Kern der Erfindung ist also, dass eine situationsgerechte Spielbefreiung den Einzugsnippeln zugeordnet wird, d.h. das Spiel wird entfernt, wenn die Einzugsnippel unter Zugkraft stehen und das Spiel wird den Einzugsnippeln wieder zugeordnet, wenn die Zugkraft entfernt wird.

In einer ersten, bevorzugten Ausführungsform wird dies dadurch erreicht, dass der Einzugsnippel in einer Sackbohrung im Bereich der Palette mit Hilfe eines Konusringes gehalten wird, welcher Konusring seinerseits in einem Halteflansch angeordnet ist.

Es sind hierbei zwischen dem Einzugsnippel und dem Konusring in Zugrichtung auf den Einzugsnippel (in Längsrichtung des Einzugsnippels) im Winkel hierzu stehende Konusflächen vorhanden, die dazu führen, dass bei Einwirkung einer Zugkraft auf den Einzugsnippel diese Konusflächen sich radial nach auswärts verschieben und hierdurch den Konusring radial auswärts nach aussen verdrängen und hierbei gleichzeitig eine radial nach auswärts gerichtete Verschiebekraft auf den sich an den Konusring radial aussen anschliessenden Halteflansch ausgeübt wird.

Wichtig hierbei ist, dass die Passfläche, welche den satten Sitz (spielfreien Sitz) des Einzugsnippels in dem Schnellspannzylinder sichert, am radialen Aussenumfang des Halteflansches angeordnet ist. Dieser greift also in eine zugeordnete Passbohrung im Schnellspannzylinder ein und legt sich spielfrei am Innenumfang dieser zugeordneten Passbohrung an.

Damit wird also die technische Lehre nach der vorliegenden Erfindung erfüllt, dass nämlich bei Einwirken einer Zugkraft, welche in Längsrichtung auf den Einzugsnippel wirkt, der Konusring radial nach aussen verdrängt wird und dieser gleichzeitig den radial aussen liegenden Halteflansch radial nach aussen verschiebt und aufweitet, so dass dieser mit seiner Passbohrung vollkommen spielfrei und ringsum gesichert in der Passbohrung anliegt. Damit wird auch die Einzugskraft wesentlich erhöht, weil der Halteflansch in die Passbohrung praktisch kraft- und formschlüssig hineingreift und eine sehr gute, überdimensionierte Einzugskraft zwischen dem Einzugsnippel und dem zugeordneten Spannzylinder besteht.

In einer anderen Ausgestaltung der vorliegenden Erfindung ist es vorgesehen, dass anstatt der Verwendung von Konusflächen, die schräg in Richtung zur Einzugsrichtung des Einzugsnippels ausgebildet sind, rundprofilierte Kugelflächen verwendet werden, welche gleichfalls zu einem radialen Aufweiten eines Halteflansches führen, welche sich demzufolge ebenfalls bei festgespanntem Einzugsnippel kraft- und formschlüssig an den Innenumfang der zugeordneten Passbohrung anlegt.

Dieser Einzugsnippel ist im wesentlichen pendelnd gelagert, d.h. er ist im Ruhezustand mit einem derartigen Spiel behaftet, dass er um seine Längsachse herum pendeln kann, wobei der Pendelmittelpunkt etwa im Bereich der Palette liegt. Sobald aber eine entsprechende Einzugskraft auf diesen Einzugsnippel ausgeübt wird, verfestigt er sich in seinem Sitz aufgrund der Kugelfläche und der zugeordneten Konusflächen im Bereich des Halteflansches, die zusammenwirken, um so den Halteflansch radial auswärts zu verdrängen und die am radialen Aussenumfang des Halteflansches angeordneten Passflächen in kraft- und formschlüssigen Eingriff am Innenumfang der Passbohrung des Spannzylinders zu bringen.

In einer dritten Ausführungsform ist der Einzugsnippel in einem Federelement gelagert, das wiederum in einer Passbohrung der Palette befestigt ist, z.B. über einen Ring. Es kann hier aber auch jede andere geeignete Form der Befestigung verwendet werden.

Die Berührflächen zwischen Einzugsnippel und Federelement sind zumindest teilweise konisch oder kugelförmig ausgebildet.

Bei einer Zugkraft auf den Einzugsnippel verformt sich das Federelement, so dass der Einzugsnippel spielfrei an der Palette festgelegt wird.

Die vorher genannten Passflächen zur Zentrierung im Spannzylinder sind bei dieser Ausführungsform bevorzugt direkt am Einzugsnippel angebracht, werden also nicht aufgeweitet. Es ist allerdings auch hier durch eine entsprechende Gestaltung des Federelements möglich, diese Passflächen direkt am Federelement bereit zu stellen, so dass auch diese beim Einzug des Einzugsnippels aufgeweitet werden.

Wichtig ist bei den Ausführungsbeispielen, dass, sobald die Zugkraft von den Einzugsnippeln entfernt wird, diese sozusagen wieder in ihre Sackbohrung in der Palette zurückspringen und wieder ihr herkömmliches Spiel einnehmen, so dass die so ausgestaltete Palette einfach durch leichtes Verkanten von dem Schnellspannsystem abgehoben werden kann.

Hierbei wird es bevorzugt, dass der Schnellspannzylinder so ausgebildet ist, dass der Kolbenboden auf den Kopf des Einzugsnippels drückt, so dass dieser aus der Passung herausgehoben wird. Neben der ausgezeichneten und überdimensionierten Haltekraft zwischen dem Einzugsnippel und der zugeordneten Passbohrung des Spannzylinders wird darüber hinaus also auch noch ein leichtes Lösen des Einzugsnippels aus diesem Spannzylinder gewährleistet.

Alle in den Unterlagen, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine erste Ausführungsform der Befestigung eines Einzugsnippel in einer Palette,
- Figur 2:: die Draufsicht auf Figur 1,
- Figur 3:: die Draufsicht auf ein zweites Ausführungsbeispiel nach Figur 4,
- Figur 4:: Schnitt durch ein zweites Ausführungsbeispiel, und
- Figur 5:: Schnitt durch ein drittes Ausführungsbeispiel.

In einer Palette 1 ist eine Sackbohrung 2 angeordnet, in welcher ein Einzugsnippel 14 pendelnd und spielbehaftet gelagert ist. Hierbei ist in der Sackbohrung 2 zunächst ein Halteflansch 3 eingesetzt, der sich satt mit seinen äußeren Umfangsflächen an den zugeordneten Innenumfangsflächen der Sackbohrung 2 anlegt. Zwischen diesen Berührungsflächen zwischen dem Halteflansch 3 und der Sackbohrung 2 ist kein Spiel vorgesehen.

Der Halteflansch 3 wird hierbei mit gleichmässig am Umfang verteilt angeordneten Schrauben 17 in der Sackbohrung 2 der Palette 1 verankert.

Am Innenumfang des Halteflansches 3 ist ein Konusring 18 angeordnet, wobei der Konusring 18 wiederum in seinem Inneren den Einzugsnippel 14 trägt.

Hierbei ist wichtig, dass der Einzugsnippel im Berührungsbereich mit dem Konusring 18 schräg nach innen laufende Konusflächen 8 aufweist, die demzufolge einen Winkel zur Längsachse (Pfeilrichtung 15) des Einzugsnippels 14 bilden.

An die schrägen, inneren Konusflächen 8 schliessen sich in vertikaler Richtung ausgerichtete Flächen 9 an, die spielbehaftet sind.

Die Berührungsflächen zwischen dem Konusring 18 und dem zugeordneten Halteflansch 3 sind wie folgt ausgebildet:

Eine vertikale, mit Spiel 11 behaftete Fläche 7 geht in eine horizontale spielfreie Fläche 6 über, die ihrerseits wiederum in eine teilweise mit Spiel 12 behaftete Fläche 27 übergeht. Hierbei ist wichtig, dass ausgehend von der horizontalen Fläche 6 das Spiel 12 nur bis zur Position 13 geht, während jenseits der Position 13 in Pfeilrichtung 15 die weitere Fläche 27 ohne Spiel ausgebildet ist.

Die innere horizontale Fläche 5 des Halteflansches 3 hat keine Funktion und ist gegenüber der äusseren Fläche der Palette 1 zurückversetzt.

Wichtig ist nun, dass sich am radialen Innenumfang des Halteflansches 3 radial auswärts gerichtete und abgerundete (bombierte) Passflächen 4 anschliessen, wobei die Passflächen 4 nach unten in Pfeilrichtung 15 in einen Radius 20 übergehen.
Dieser Radius 20 ist als Schutzradius gedacht, um nämlich den gesamten Ansatz 28 des Konusrings 18 in die nicht zeichnerisch näher dargestellte Passbohrung des Spannzylinders einzuführen. Im eingeführten Zustand legen sich dann die Passflächen 4 am zugeordneten Innenumfang der Passbohrung des Spannzylinders an, wobei die Stirnfläche des Spannzylinders an der Fläche 29 der Palette 1 anstösst und sich dort abstützt.

Der Spannzylinder weist hierbei Kugeln auf, die sich als Kugelkäfig in die zugeordneten Ausnehmungen 16 am Kopf des Einzugsnippels 14 anlegen und einen formschlüssigen Verbund zwischen dem Einzugsnippel 14 und den Spannelementen des Spannzylinders erbringen. Der Einzugsnippel 14 wird damit in Pfeilrichtung 15 in den Spannzylinder hineingezogen, wobei sich gleichzeitig der Spannzylinder an der Spannfläche 29 abstützt. Damit wird die Palette 1 spielfrei in den Spannzylinder hineingezogen, denn während der Ausübung der Zugkraft auf den Einzugsnippel 14 in Pfeilrichtung 15 erfolgt eine spielbeseitigende Verfestigung des Einzugsnippels in der Sackbohrung 2.

Dies erfolgt dadurch, dass die Konusflächen 8 des Einzugsnippels an den zugeordneten Konusflächen des Konusrings 18 entlanggleiten und dieser schräg nach unten und aussen verdrängt wird, wobei diese Verdrängungsbewegung von dem Ansatz 30 des Konusrings 18 auf den Ansatz 28 des Halteflansches 3 weitergeleitet wird. Damit verschiebt sich die Passfläche 4 in radialer Richtung (Pfeilrichtung 19) nach aussen und damit wird der Einzugsnippel 14 in der Passbohrung des Spannzylinders spielfrei verankert.

Gleichzeitig wird noch das Spiel 10 zwischen der Innenfläche des Einzugsnippels 14 und dem Grund der Sackbohrung 2 hierbei vergrößert.

Wird hingegen die Zugkraft in Pfeilrichtung 15 weggenommen, kommt es zu einer rückwärts gehenden Verformung und das Spiel 10 wird vermindert, wobei es aber gleichzeitig noch in vermindertem Umfang aufrecht erhalten wird, so dass bei entfernter Zugkraft der Einzugsnippel in der Sackbohrung 2 sich verkanten kann.

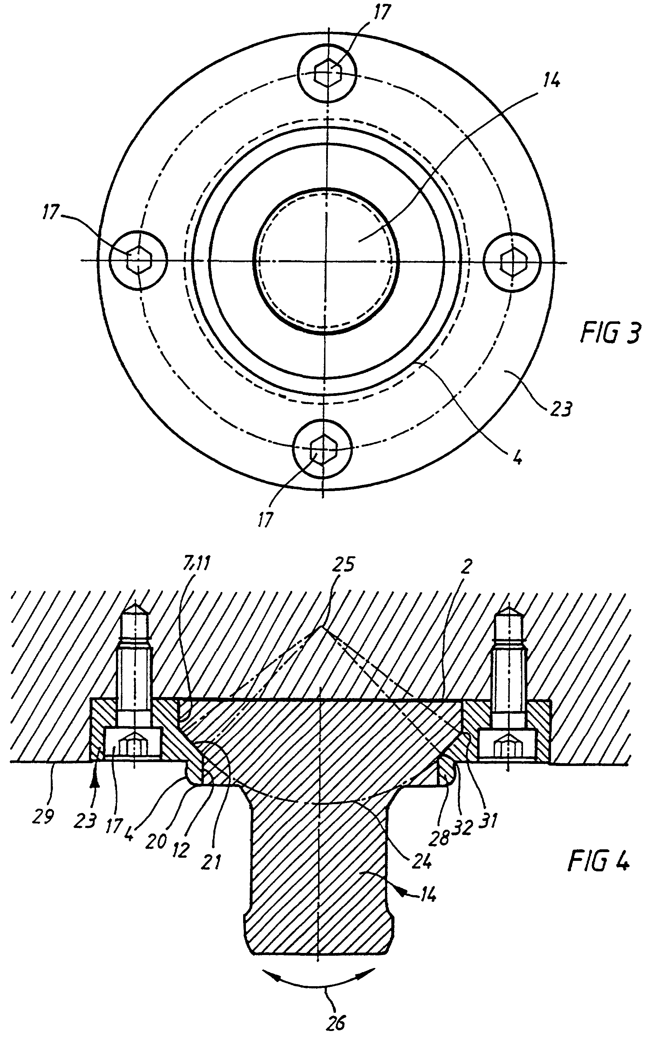

Eine ähnliche Ausführung wird anhand der Figuren 3 und 4 dargestellt, wobei dem Einzugsnippel 14 sogar eine Pendelbewegung in Pendelrichtung 26 zugeordnet wird.

In diesem Ausführungsbeispiel kann der Konusring 18 entfallen und der statt des Halteflansches 3 verwendete Halteflansch 23 übernimmt auch teilweise Funktionen des vorher vorhandenen Konusrings 18.

Hierbei ist wichtig, dass ausgehend von der mit Spiel 11 behafteten Fläche 7 sich an diese Fläche eine Kugelfläche 21 anschliesst, die im Bereich eines Kugelradius 24 angeordnet ist, wobei der Kugelmittelpunkt 25 im Bereich der Palette 1 zentrisch zu der Längsmittenachse des Einzugsnippels 14 liegt.

Die Kugelfläche beginnt damit bei Position 31 und endet bei Position 32. An die Position 32 schliesst sich in Längsrichtung des Einzugsnippels 14 gesehen wiederum die mit Spiel 12 behaftete Fläche 9 an.

Ebenso ist die mit Spiel 10 behaftete Fläche an der Basis des Einzugsnippels 14 vorhanden.

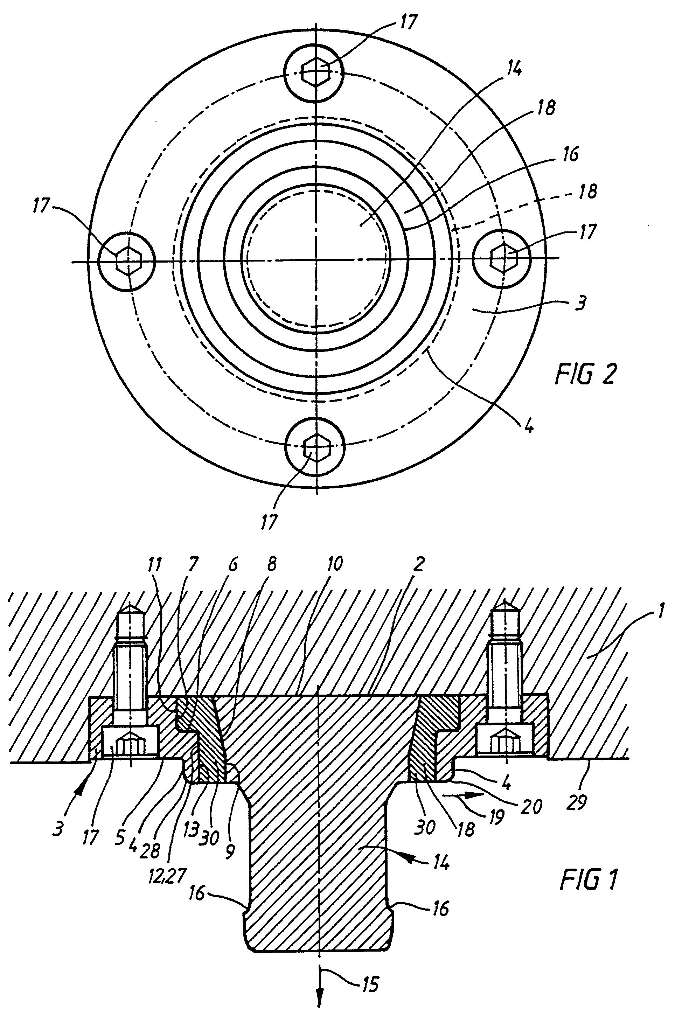

Im gezeigten Zustand kann also der Einzugsnippel 14 Bewegungen in Pendelrichtung 26 ausführen. Wird hingegen in Pfeilrichtung 15 auf ihn eine Kraft ausgeübt, dann kommt es zu einer Relativverschiebung der Kugelflächen 21 des Einzugsnippels mit den zugeordneten Kugelflächen des Halteflansches 23, wodurch wiederum der Ansatz 28 des Halteflansches 23 in Pfeilrichtung 19 (Figur 1) nach aussen radial verdrängt wird und hierbei die Passfläche 4 eine gleiche radiale Verdrängungsbewegung ausführt. Hierdurch kommt es zu einer spielfreien Anlage dieser Passfläche 4 am zugeordneten Innenumfang der Bohrung im Spannzylinder.

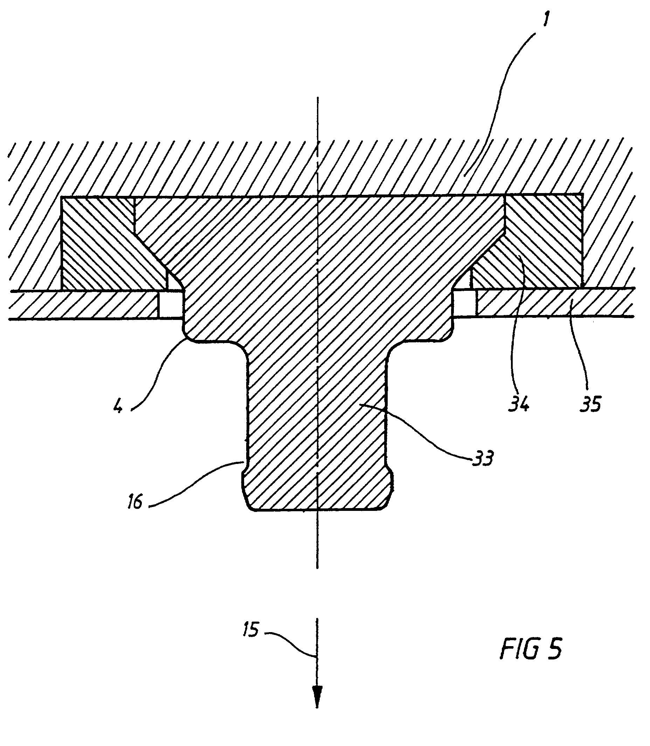

Fig. 5 zeigt eine weitere Ausführungsform, ähnlich Fig. 4. Der Einzugsnippel 33 ist in einer Palette 1 aufgenommen. Sein unteres Ende verläuft stellenweise konisch, wie aus der Fig. 5 erkennbar. Die Lagerung des Einzugsnippels 33 erfolgt über ein Federelement 34, das über einen Ring 35 in der Bohrung gehalten ist.

Wird nun in Pfeilrichtung 15 eine Kraft auf den Einzugsnippel 33 ausgeübt, so legt er sich mit seinen konischen Flächen an den zugeordneten Flächen des Federelements 34 an und verformt dieses. Die Verformung führt zu einer Festlegung des Einzugsnippels 33, z.B. dadurch, daß das Federelement 34 radial aufgeweitet wird.

Wichtig bei allen Ausführungsbeispielen ist, dass das Spiel lediglich bei Einwirkung einer Zugkraft auf den Einzugsnippel beseitigt wird, wobei die Zugkraft in Richtung auf die Längsachse des Einzugsnippels wirkt, währenddessen, wenn die Zugkraft entfernt wird, der Einzugsnippel wieder ein begrenztes Pendelspiel zugeordnet erhält.

### Zeichnungs-Legende

- 1: Palette
- 2: Sackbohrung
- 3: Halteflansch
- 4: Passfläche
- 5: Fläche
- 6: Fläche
- 7: Fläche
- 8: Konusfläche
- 9: Fläche
- 10: Spiel
- 11: Spiel
- 12: Spiel
- 13: Position
- 14: Einzugsnippel
- 15: Pfeilrichtung
- 16: Ausnehmung
- 17: Schraube
- 18: Konusring
- 19: Pfeilrichtung
- 20: Radius
- 21: Kugelfläche

- 23: Halteflansch
- 24: Kugelradius
- 25: Mittelpunkt
- 26: Pendelrichtung
- 27: Fläche
- 28: Ansatz (Halteflansch)
- 29: Fläche
- 30: Ansatz (Konusring)
- 31: Position
- 32: Position
- 33: Einzugsnippel
- 34: Federelement
- 35: Ring

## Patentansprüche

1. Einzugsnippel (14,33) zur Befestigung einer Palette (1) an einer Werkzeugmaschine, wobei der Einzugsnippel zur Befestigung der Palette von einem Schnellspannsystem aufgenommen ist, **dadurch gekennzeichnet, dass** der Einzugsnippel (14,33) spielbehaftet an der Palette (1) angebracht und durch das Aufbringen einer Zugkraft in seiner Längsrichtung (15) weg von der Palette (1) spielfrei festlegbar ist.

2. Einzugsnippel nach Anspruch 1, **dadurch gekennzeichnet, dass** der Einzugsnippel (14,33) in einem federnden Bauteil (18, 23, 34) aufgenommen ist.

3. Einzugsnippel nach Anspruch 2, **dadurch gekennzeichnet, dass** das federnde Teil (18) von einem weiteren, ebenfalls federnden, Element (3) umgeben ist.

4. Einzugsnippel nach Anspruch 2 oder 3, **dadurch gekennzeichnet, dass** die Berührflächen zwischen dem Einzugsnippel (14,33) und dem Innersten federnden Teil (18,23,34) zumindest teilweise konisch oder kugelförmig ausgebildet sind.

5. Einzugsnippel nach einem der Ansprüche 2 bis 4, **dadurch gekennzeichnet, dass** das federnde Teil (18,34) ein seitliches Spiel zu dem umgebenden Bauteil (3,1) aufweist.

6. Einzugsnippel nach einem der Ansprüche 1 bis 5, **dadurch gekennzeichnet, dass** Passflächen (4) zur Zentrierung des Einzugsnippels (14,33) in einer Aufnahmebohrung des Spannsystems vorhanden sind.

7. Einzugsnippel nach Anspruch 6, **dadurch gekennzeichnet, dass** die Passflächen (4) am Einzugsnippel (33) ausgebildet sind.

8. Einzugsnippel nach Anspruch 6, **dadurch gekennzeichnet, dass** die Passflächen (4) an einem federnden Teil (3,23) ausgebildet sind.

9. Einzugsnippel nach Anspruch 8, **dadurch gekennzeichnet, dass** die Passflächen (4) bei der Festlegung des Einzugsnippels (14) durch die Zugkraft aufgeweitet werden.

## Claims

1. Feed fitting (14, 33) for fastening a pallet (1) on a machine tool, which feed fitting is received in a quick-action clamping system for fastening the pallet, **characterised in that** the feed fitting (14, 33) is mounted, with a clearance, on said pallet (1) and can be fixed, without a clearance, by application of a tensile force in its longitudinal direction (15) away from said pallet (1).

2. Feed fitting according to Claim 1, **characterised in that** the feed fitting (14, 33) is received in a resilient component (18, 23, 34).

3. Feed fitting according to Claim 2, **characterised in that** said resilient element (18) is surrounded by further, equally resilient component (3).

4. Feed fitting according to Claim 2 or 3, **characterised in that** the contact surfaces between the feed fitting (14, 33) and the innermost resilient component (18, 23, 34) present a conical or spherical configuration, at least partly.

5. Feed fitting according to any of the Claims 2 to 4, **characterised in that** said resilient element (18, 34) has a lateral clearance relative to said surrounding component (3, 1).

6. Feed fitting according to any of the Claims 1 to 5, **characterised in that** fitting surfaces (4) are provided for centring the feed fitting (14, 33) in a receiving bore of said clamping system.

7. Feed fitting according to Claim 6, **characterised in that** said fitting surfaces (4) are formed on the feed fitting (33).

8. Feed fitting according to Claim 6, **characterised in that** said fitting surfaces (4) are configured on a resilient part (3, 23).

9. Feed fitting according to Claim 8, **characterised in that** said fitting surfaces (4) are expanded by the tensile force when the feed fitting (14) is fixed.

## Revendications

1. Raccord à vis d'approche (14, 33) à fixer une palette (1) sur une machine-outil, ce raccord à vis d'approche étant reçu dans un système de serrage à action rapide à fixer la palette, **caractérisé en ce que** le raccord à vis d'approche (14, 33) est monté, à un jeu, sur ladite palette (1) et peut se fixer, sans jeu, par l'application d'un effort de traction en son sens longitudinal (15) à éloignement de ladite palette (1).

2. Raccord à vis d'approche selon la revendication 1, **caractérisé en ce que** le raccord à vis d'approche (14, 33) est reçu dans un composant élastique (18, 23, 34).

3. Raccord à vis d'approche selon la revendication 2, **caractérisé en ce que** ledit élément élastique (18) est entouré par un composant additionnel (3), qui est également élastique.

4. Raccord à vis d'approche selon la revendication 2 ou 3, **caractérisé en ce que** les surfaces de contact entre le raccord à vis d'approche (14, 33) et le composant élastique le plus intérieur (18, 23, 34) ont, au moins en partie, une configuration conique ou sphérique.

5. Raccord à vis d'approche selon une quelconque des revendications 2 à 4, **caractérisé en ce que** ledit élément élastique (18, 34) a un jeu latéral relatif audit composant l'entourant (3, 1).

6. Raccord à vis d'approche selon une quelconque des revendications 1 à 5, **caractérisé en ce que** des surfaces d'ajustage (4) sont formées à centrer le raccord à vis d'approche (14, 33) dans un alésage récepteur dudit système de serrage.

7. Raccord à vis d'approche selon la revendication 6, **caractérisé en ce que** lesdites surfaces d'ajustage (4) sont formées sur le raccord à vis d'approche (33).

8. Raccord à vis d'approche selon la revendication 6, **caractérisé en ce que** lesdites surfaces d'ajustage (4) sont formées sur un élément élastique (3, 23).

9. Raccord à vis d'approche selon la revendication 8, **caractérisé en ce que** lesdites surfaces d'ajustage (4) sont évasées par l'effort de traction, quand le raccord à vis d'approche (14) est fixé.
